# EUROPEAN PATENT SPECIFICATION

(11) **EP 4 456 707 B1**
(45) Date of publication and mention of the grant of the patent: **27.08.2025**
(21) Application number: 22847629.7
(22) Date of filing: 27.12.2022
(51) Int. Cl.: A01F 15/07, D04B 21/12

(54) **KNITTED NET FOR ROUND BALERS**
GESTRICKTES NETZ
FILET TRICOTÉ

(30) Priority: 28.12.2021 IT 202100032813
(43) Date of publication of application: 06.11.2024
(73) Proprietor: Novatex Italia S.p.A, 23848 Oggiono (LC) (IT)
(72) Inventor: CASTAGNA, Natale, 23848 Oggiono LC (IT); CASATI, Marco, 23848 Oggiono LC (IT)
(74) Representative: Perani & Partners S.p.A.
(86) International application number: PCT/IB2022/062813
(87) International publication number: WO 2023/126834

(56) References cited:
- EP-A1- 3 831 995
- EP-A2- 0 368 516
- EP-B1- 0 368 516
- EP-B1- 3 831 995
- US-A1- 2014 179 184

## Description

The present invention relates to making a knitted net for round balers. This knitted net for round balers can be used to contain different types of forage, such as hay, straw or other types, in round bales with cylindrical shape.

In the state of the art, knitted nets for round balers are known. A knitted net for round balers of the known type is produced from thermoplastic materials. In detail, the knitted net for round balers comprises a first yarn that defines the longitudinal warps, woven in the form of chains. A second yarn defines the weft and connects two neighbouring chains forming a triangular mesh.

The chains that make up the net are spaced 2'' apart and are obtained by weaving two threads of HDPE (high density polyethylene) of rectangular cross-section with a width equal to 1.7 mm and a thickness equal to 30.0 µm. The net has a height equal to 123 cm and is produced by the frame using 25 chains. The use of two threads for each chain is necessary in the nets of known type, as it allows to obtain nets with adequate mechanical characteristics.

The main use of a knitted net for round balers is the containment of different types of forage in round bales with cylindrical shape. The forage, after being cut and in some cases suitably dried, is harvested by means of a round baler into round bales with cylindrical shape. At the end of the harvest cycle, the forage is baled by applying a suitable number of layers of knitted net for round balers on the round bale with cylindrical shape to enable it to be transported. An example of known net is described in publication EP 3 831 995 A1.

Once forage harvesting using the net for round balers is finished, the round bales are stored, mainly outdoors.

### SUMMARY OF THE INVENTION

At a disadvantage, the production of such nets entails an environmental impact due to the use of plastic material and a production limit due to the number of threads per frame. The nets, being placed outdoors during their life cycle, are also subject to the action of UV rays, which lead to a degradation of the mechanical properties of the material of the threads, proportional to the thickness of the chain.

In this context, the technical task underlying the present invention is to provide a knitted net for round balers which obviates the drawbacks in the prior art as described above.

In particular, an object of the present invention is to make available a knitted net for round balers made using less plastics with equal mechanical performance.

A further object of the present invention is to make available a knitted net for round balers that exhibits better resistance to the action of UV rays.

The invention solves the technical problem in that the knitted net for round balers has a single longitudinal thread for each chain, thus reducing the environmental impact because of the use of plastic material. In addition, using a single thread, the resistance of the net to UV radiation is improved, maintaining or improving the mechanical performance of the entire net.

Advantageously, moreover, the production efficiency is improved as the manufacture is simplified thanks to the presence of a single longitudinal thread for each chain, thus reducing the total number of longitudinal threads for each production cycle.

### LIST OF FIGURES

Further characteristics and advantages of the present invention will become more apparent from the exemplary, and therefore non-limiting, description of a preferred but not exclusive embodiment of a knitted net for round balers, as illustrated in the appended drawings, wherein:
- Figure 1 shows a schematic plan view of a portion of a knitted net for round balers according to the present invention; and
- Figure 2 shows a sectional view of a detail of the net of Figure 1.

### DETAILED DESCRIPTION

With reference to the accompanying figures, 1 denotes a knitted net for round balers according to the present invention.

The net 1 comprises a plurality of chains 2 that develop along a first direction X, parallel to the longitudinal direction. The net 1 also extends along a second direction Y, perpendicular to the first direction X. This net 1 further comprises a plurality of transverse threads 4 that connect two adjacent chains 2 to each other. The chains 2 and the transverse threads 4 define two types of yarn of the structure of the net 1. In particular, the chains 2 define the longitudinal warps, otherwise called Franze or chains. The transverse threads 4, otherwise called Schuss, represent the weft of the net 1. More details on the chains 2 and the transverse threads 4 will be provided in a later part of this disclosure.

In the preferred embodiment, the net 1 extends over a width comprised between 120 and 126 cm along the second direction Y, perpendicular to the first direction X, preferably extending over a width equal to 123 cm. In general, the width of the net along the second direction Y depends on several factors including the type of material, the temperature, the sizes of the chain 2, the tension of the mesh and the geometry of the mesh.

Similarly, the net 1 extends over a length comprised between 1500 and 5000 m along the first direction X, preferably extending over a length equal to 2600 m. In use, the net 1 is wound on a reel (not illustrated) to enable it to be transported.

In particular, because of the geometry of the mesh and of the tension applied, the actual length of the net is always shorter than the length obtained by multiplying the distance between two adjacent chains 2 by the total number of chains 2.

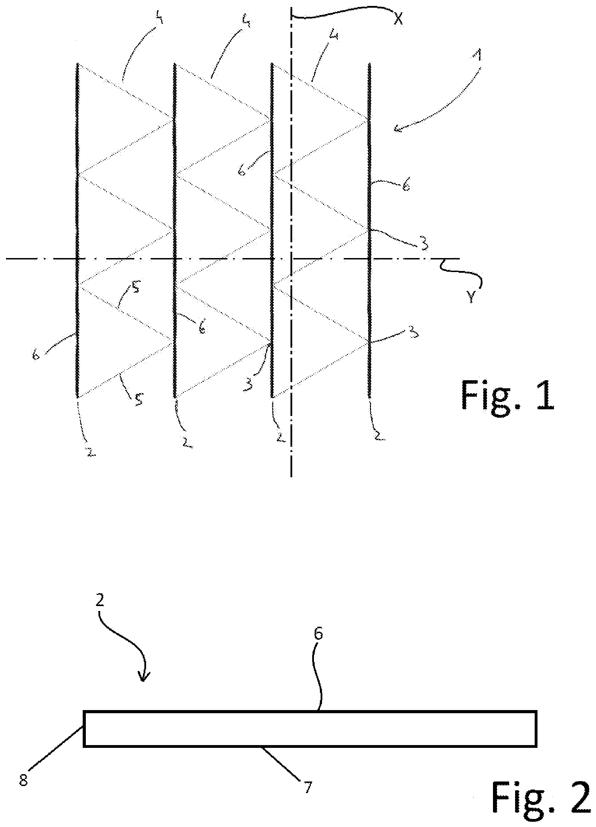

With particular reference to the chains 2 schematically shown in Figure 1, it should be noted that the distance between two adjacent chains 2 is comprised between 5.00 cm and 5.16 cm, preferably equal to 5.08 cm, so that the total number of chains 2 that make up the net 1 is comprised between 24 and 26, preferably equal to 25.

Each chain 2 comprises a single longitudinal thread 6. This longitudinal thread 6 is made with a mixture of polymers comprising HDPE, polypropylene, additives and stabilizers. HDPE represents the largest contribution by weight of the polymer mixture, while polypropylene makes up at least 3% thereof. Additives and stabilizers are dosed in appropriate concentrations depending on the geographical area of use, in order to adapt the structure of the net 1 to the level of UV radiation present in the location in which it is used, in order to preserve its mechanical properties.

In more detail, each longitudinal thread 6 has a rectangular cross-section having a height 8 comprised between 45 and 60 µm, preferably between 51 and 55 µm, even more preferably equal to 53 µm. The section of the longitudinal thread 6 also has a width 7 comprised between 1.7 and 2.6 mm, preferably between 2.0 and 2.3 mm, even more preferably equal to 2.165 mm. Advantageously, the sizes of the rectangular cross-section, together with the mixture of polymers of which each longitudinal thread 4 is composed, guarantee the mechanical strength necessary for the entire net 1.

Returning now to the transverse threads 4 mentioned above, it should be noted that they connect two adjacent chains 2 at knots 3 placed on the chains 2, in particular on the longitudinal threads 6. Each knot 3 is arranged on the net 1 according to a grid configuration. In particular, the knots 3 are arranged at regular intervals, both along the first direction X, and along the second direction Y. The distance between the knots 3 along the first direction X is comprised between 3.00 cm and 3.04 cm, preferably equal to 3.024 cm, while, along the second direction Y, it is equal to the distance between the chains 2, the knots 3 being placed at the chains 2. The nodes 3 represent the critical points of the net 1, i.e., points where a break of the net 1 is most likely to occur.

Each transverse thread 4 comprises a plurality of segments 5. Each segment 5 connects a knot 3 of a chain 2 to another knot 3 of the adjacent chain 2 in a position of the preceding or following grid with reference to the first direction X. The manner in which the segments 5 connect two adjacent chains 2 defines the mesh geometry of the net 1. In particular, the segments 5 develop between two adjacent chains 2 forming a series of triangular-shaped meshes. The geometry of the net 1 is thus defined as triangular mesh geometry.

The angle comprised between two consecutive segments 5, at a knot 3, is comprised between 60° and 62°, preferably equal to 61°. The angle comprised between a segment 5 and a chain 2, at a knot 3, is comprised between 57° and 62°, preferably equal to 58.9°. The width of this angle guarantees greater grip on the forage, improving its compression and ensuring better waterproofing.

Each segment 5 has a length comprised between 5.7 cm and 6.2 cm, preferably equal to 5.911 cm. The first and last segments 5, placed at the ends of the transverse thread 4, are parallel to the second direction Y, connecting two consecutive knots 3 to each other.

Note that the number of transverse threads 4 in the net 1 is always one element less compared to the total number of chains 2.

When a longitudinal tension is applied on the net 1, the chains 2 stretch. The

## Claims

1. Knitted net (1) for round balers comprising a plurality of chains (2) arranged parallel to a longitudinal direction of development, each chain (2) being equidistant from two adjacent chains (2), said chains (2) each having a series of knots (3), the knots (3) of the chains (2) being arranged in a grid along a first direction (X) parallel to the longitudinal direction and along a second direction (Y) perpendicular to the first direction (X); a plurality of transverse threads (4) each arranged between two adjacent chains (2), each transverse thread (4) comprising a plurality of segments (5) each developing between a first knot (3) of a chain (2) and a second knot (3) located on an adjacent chain (2), the second knot (3) being located at a position preceding or following the first knot (3) along the first direction (X); **characterized in that** each chain (2) comprises a single longitudinal thread (6); **characterized in that** each longitudinal thread (6) has a rectangular cross-section having a height (8) comprised between 45 and 60 µm, preferably between 51 and 55 µm, a width (7) comprised between 1.7 and 2.6 mm, preferably between 2.0 and 2.3 mm.

2. Net (1) according to the preceding claim **characterized in that** the height (8) and the width (7) of the cross-section of the longitudinal thread (6) are equal to 53 µm and 2.165 mm, respectively.

3. Net (1) according to any one of the preceding claims **characterized in that** each longitudinal thread (6) is made with a mixture of polymers comprising at least HDPE and polypropylene.

4. Net (1) according to any one of the preceding claims **characterized in that** the longitudinal threads (6) and the transverse threads (4) are made of different materials.

5. Net (1) according to the preceding claim **characterized in that** the mixture of polymers with which the longitudinal threads (6) are made comprises at least 3% by weight of polypropylene.

6. Net (1) according to any one of the preceding claims **characterized in that** the distance between two adjacent knots (3) along the second direction (Y) is comprised between 5.07 cm and 5.09 cm.

7. Net (1) according to any one of the preceding claims **characterized in that** the distance between two adjacent knots (3) along the first direction (X) is comprised between 3.02 cm and 3.03 cm.

8. Net (1) according to any one of the preceding claims **characterized in that** said net (1) comprises a number of longitudinal threads (6) comprised between 20 and 30, preferably equal to 25.

9. Method for making a knitted net (1) for round balers according to any one of the preceding claims, the method comprising the steps of:
- producing a film of polymeric material;
- separating the film of polymeric material into a plurality of chains (2) each comprising a single longitudinal thread (6);
- knitting the strips by means of a weaving machine for the production of the net (1);
- winding the net (1) onto a reel.

## Patentansprüche

1. Gestricktes Netz (1) für Rundballenpressen, umfassend eine Vielzahl von Ketten (2), die parallel zu einer Längsrichtung der Entwicklung angeordnet sind, wobei jede Kette (2) von zwei benachbarten Ketten (2) gleich beabstandet ist, wobei die Ketten (2) jeweils eine Reihe von Knoten (3) aufweisen, wobei die Knoten (3) der Ketten (2) in einem Gitter entlang einer ersten Richtung (X) parallel zu der Längsrichtung und entlang einer zweiten Richtung (Y) senkrecht zu der ersten Richtung (X) angeordnet sind; eine Vielzahl von Querfäden (4), die jeweils zwischen zwei benachbarten Ketten (2) angeordnet sind, jeder Querfaden (4) umfassend eine Vielzahl von Segmenten (5), die sich jeweils zwischen einem ersten Knoten (3) einer Kette (2) und einem zweiten Knoten (3), der sich an einer benachbarten Kette (2) befindet, entwickeln, wobei sich der zweite Knoten (3) an einer Position vor oder nach dem ersten Knoten (3) entlang der ersten Richtung (X) befindet; **dadurch gekennzeichnet, dass** jede Kette (2) einen einzigen Längsfaden (6) umfasst; **dadurch gekennzeichnet, dass** jeder Längsfaden (6) einen rechteckigen Querschnitt aufweist, der eine Höhe (8) zwischen 45 und 60 µm, vorzugsweise zwischen 51 und 55 µm, und eine Breite (7) zwischen 1,7 und 2,6 mm, vorzugsweise zwischen 2,0 und 2,3 mm, aufweist.

2. Netz (1) nach dem vorherigen Anspruch, **dadurch gekennzeichnet, dass** die Höhe (8) und die Breite (7) des Querschnitts des Längsfadens (6) jeweils gleich 53 µm und 2,165 mm sind.

3. Netz (1) nach einem der vorherigen Ansprüche, **dadurch gekennzeichnet, dass** jeder Längsfaden (6) aus einem Gemisch aus Polymeren gefertigt ist, umfassend mindestens HDPE und Polypropylen.

4. Netz (1) nach einem der vorherigen Ansprüche, **dadurch gekennzeichnet, dass** die Längsfäden (6) und die Querfäden (4) aus unterschiedlichen Materialien gefertigt sind.

5. Netz (1) nach dem vorherigen Anspruch, **dadurch gekennzeichnet, dass** das Polymergemisch, aus der die Längsfäden (6) gefertigt sind, mindestens 3 Gewichts-% Polypropylen umfasst.

6. Netz (1) nach einem der vorherigen Ansprüche, **dadurch gekennzeichnet, dass** der Abstand zwischen zwei benachbarten Knoten (3) entlang der zweiten Richtung (Y) zwischen 5,07 cm und 5,09 cm ist.

7. Netz (1) nach einem der vorherigen Ansprüche, **dadurch gekennzeichnet, dass** der Abstand zwischen zwei benachbarten Knoten (3) entlang der ersten Richtung (X) zwischen 3,02 cm und 3,03 cm ist.

8. Netz (1) nach einem der vorherigen Ansprüche, **dadurch gekennzeichnet, dass** das Netz (1) eine Anzahl von Längsfäden (6) aufweist, die zwischen 20 und 30, vorzugsweise 25, ist.

9. Verfahren zum Herstellen eines gestrickten Netzes (1) für Rundballenpressen nach einem der vorherigen Ansprüche, das Verfahren umfassend die folgenden Schritte:
- Herstellen eines Films aus polymerem Material;
- Trennen des Films aus polymerem Material in eine Vielzahl von Ketten (2), jeweils umfassend einen einzelnen Längsfaden (6);
- Verstricken der Streifen mittels einer Webmaschine zum Erzeugen des Netzes (1);
- Aufwickeln des Netzes (1) auf eine Spule.

## Revendications

1. Filet tricoté (1) pour presses à balles rondes comprenant une pluralité de chaînes (2) disposées parallèlement à une direction longitudinale de développement, chaque chaîne (2) étant équidistante de deux chaînes (2) adjacentes, lesdites chaînes (2) ayant chacune une série de nœuds (3), les nœuds (3) des chaînes (2) étant disposés en grille le long d'une première direction (X) parallèle à la direction longitudinale et le long d'une seconde direction (Y) perpendiculaire à la première direction (X) ; une pluralité de fils transversaux (4) disposés chacun entre deux chaînes adjacentes (2), chaque fil transversal (4) comprenant une pluralité de segments (5) se développant chacun entre un premier nœud (3) d'une chaîne (2) et un second nœud (3) situé sur une chaîne adjacente (2), le second nœud (3) étant situé au niveau d'une position précédant ou suivant le premier nœud (3) le long de la première direction (X) ; **caractérisé en ce que** chaque chaîne (2) comprend un seul fil longitudinal (6) ; **caractérisé en ce que** chaque fil longitudinal (6) a une section transversale rectangulaire ayant une hauteur (8) comprise entre 45 et 60 µm, de préférence entre 51 et 55 µm, une largeur (7) comprise entre 1,7 et 2,6 mm, de préférence entre 2,0 et 2,3 mm.

2. Filet (1) selon la revendication précédente, **caractérisé en ce que** la hauteur (8) et la largeur (7) de la section transversale du fil longitudinal (6) sont respectivement égales à 53 µm et 2,165 mm.

3. Filet (1) selon l'une quelconque des revendications précédentes, **caractérisé en ce que** chaque fil longitudinal (6) est fabriqué avec un mélange de polymères comprenant au moins du PEHD et du polypropylène.

4. Filet (1) selon l'une quelconque des revendications précédentes, **caractérisé en ce que** les fils longitudinaux (6) et les fils transversaux (4) sont faits de matériaux différents.

5. Filet (1) selon la revendication précédente **caractérisé en ce que** le mélange de polymères avec lequel les fils longitudinaux (6) sont faits comprend au moins 3 % en poids de polypropylène.

6. Filet (1) selon l'une quelconque des revendications précédentes, **caractérisé en ce que** la distance entre deux nœuds (3) adjacents le long de la seconde direction (Y) est comprise entre 5,07 cm et 5,09 cm.

7. Filet (1) selon l'une quelconque des revendications précédentes, **caractérisé en ce que** la distance entre deux nœuds (3) adjacents le long de la première direction (X) est comprise entre 3,02 cm et 3,03 cm.

8. Filet (1) selon l'une quelconque des revendications précédentes, **caractérisé en ce que** ledit filet (1) comprend un nombre de fils longitudinaux (6) compris entre 20 et 30, de préférence égal à 25.

9. Procédé de fabrication d'un filet tricoté (1) pour presses à balles rondes selon l'une quelconque des revendications précédentes, le procédé comprenant les étapes consistant à :
- produire un film de matériau polymère ;
- séparer le film de matériau polymère en une pluralité de chaînes (2) comprenant chacune un seul fil longitudinal (6) ;
- tricoter les bandes au moyen d'une machine à tisser pour la production du filet (1) ;
- enrouler le filet (1) sur une bobine.
